# EUROPÄISCHE PATENTANMELDUNG

(11) **EP 3 878 269 A1**
(43) Veröffentlichungstag der Anmeldung: **15.09.2021**
(21) Anmeldenummer: 20162027.5
(22) Anmeldetag: 10.03.2020
(51) Int. Cl.: A01G 9/02, B32B 5/02

(54) **VERWENDUNG EINES KOMPOSIT-VLIESES ZUR GEBÄUDEWAND- ODER FASSADENBEGRÜNUNG**

(71) Anmelder: Frenzelit GmbH, 95460 Bad Berneck (DE); Vertiko GmbH, 79256 Buchenbach-Himmelreich (DE)
(72) Erfinder: BRANDHORST, Stefan, 79199 Kirchzarten (DE); WIRTH, Wolfgang, 95445 Bayreuth (DE); JAHN, Peter, 95488 Eckersdorf (DE)
(74) Vertreter: Becker, Eberhard

(57) **Zusammenfassung**

Die vorliegende Erfindung betrifft die Verwendung eines Komposit-Vlieses für Wand- oder Fassadenbegrünung, das alle vorteilhafte Eigenschaften für diese Verwendung aufweist und insbesondere mindestens schwer entflammbar (B-s2,d0 gem. DIN EN 13501-1) ist und somit eine brandhemmende Wirkung erzielt. Das Komposit-Vlies umfasst eine Glasfaservliesschicht, eine Gewebeschicht und eine UV-beständige Beschichtung, wobei die Beschichtung an der der Gebäudewand bzw. der Fassade abgewandten Seite des Komposit-Vlieses angeordnet ist.

## Beschreibung

### Technisches Gebiet

Die vorliegende Erfindung betrifft die neuartige Verwendung eines Komposit-Vlieses zur Wand- oder Fassadenbegrünung, das vorteilhafte Eigenschaften aufweist und insbesondere nicht brennbar ist oder mindestens schwer entflammbar (B -s2,d0 gem. DIN EN 13501-1) und somit eine brandhemmende Wirkung erzielt.

### Stand der Technik

Als Fassadenbegrünung bezeichnet man allgemein den planmäßigen und mindestens kontrollierten Bewuchs geeigneter oder speziell vorgerichteter Fassaden mit Pflanzen, welche sowohl zum Schmuck als auch zum Schutz von Wandfassaden eingesetzt werden. Es sind diesbezüglich aus dem Stand der Technik bereits zahlreiche Systeme zur Vertikalbegrünung bekannt.

Neben der klassischen Begrünung mit Kletterpflanzen erfreuen sich heute wandgebundene Begrünungen zunehmender Beliebtheit.
Wandgebundene Begrünungen sind solche Begrünungslösungen, bei denen die an der Wand befindlichen Pflanzen keinen Wurzelkontakt zum natürlichen Standort haben, sondern in den dafür vorgesehenen Bauteilen an der Wand/der Fassade eingewurzelt sind und i.d.R. über eine technische Anlage mit Wasser und Nährstoffen versorgt werden.

Viele der wandgebundenen Bauarten verwenden Vliese, sei es zur Wasserverteilung, sei es als Substratersatzstoff, oder einfach nur als Abdeckung einer Substrat- oder anderer Schichten.

Die für solche Systeme eingesetzten Vliese haben folgende Anforderung zu erfüllen:
1. Unverrottbarkeit (d.h. keine organische Zersetzung durch Bakterien, Pilze etc.)
2. Reißfestigkeit
3. Temperaturbeständigkeit
4. Wasserverträglichkeit
5. gewisse Wasserspeicherfähigkeit
6. Wasserdurchlässigkeit
7. Luftdurchlässigkeit, hohes Porenvolumen bei dennoch geschlossener Struktur
8. Durchwurzelbarkeit
9. Beständig gegen Düngerlösungen und Huminsäure
10. Geringes Gewicht im Verhältnis zum Volumen
11. UV-beständig

Als zwölften Punkt kann konstatiert werden, dass darüber hinaus die Anforderungen an den Brandschutz immer höher werden. Es hat sich gezeigt, dass keine der bisher eingesetzten Textile oder Substratersatzstoffe alle der oben genannten Punkte zugleich erfüllen können.

Nicht brennbare Gewebe wie z.B. Stein- oder Glasgewebe oder -gestricke sind zu offen, sodass die Struktur weder Substrat tragen kann noch eine Durchwurzelbarkeit durch die Pflanzen bietet oder andernfalls zu schwer wird. Ein weiterer Nachteil von Geweben und Gestricken ist, dass sich die Fasern bei Schnitten lösen können und es zu einem "Auffasern" kommt. Nicht brennbare Vliese aus Stein (z.B. extrudierter Basalt) oder Glas, sind nicht reißfest genug und werden durch Bewitterung oder Vögel zerstört.

Die vorliegende Erfindung räumt die Nachteile der bekannten Fassadenbegründungssysteme effektiv aus.

### Kurze Beschreibung der Erfindung

Präambel: Mit dem in der Folge verwendeten Wort "Kunstfaser" sind sämtliche artifiziell hergestellte Fasern gemeint; der englische Begriff "man made fiber" wäre hier der Zutreffendste.

Die vorliegende Erfindung betrifft in einer Ausführungsform insbesondere die Verwendung eines Komposit-Vlieses für Wand- oder Fassadenbegrünung. Das Komposit-Vlies umfasst eine Kunstfaservliesschicht, eine Gewebeschicht und eine UV-beständige Beschichtung, wobei die Beschichtung an der der Wand bzw. der Fassade abgewandten Seite des Komposit-Vlieses angeordnet ist. Ferner ist die Gewebeschicht bevorzugt zwischen Beschichtung und dem Kunstfaservlies angeordnet. Die erfindungsgemäße Verwendung erlaubt es, alle der oben genannten Anforderungen zu erfüllen. In einer bevorzugten Ausführungsform umfassen die Kunstfasern der Kunstfaservliesschicht Glasfasern. In einer weiteren Ausführungsform besteht die Kunstfaservliesschicht aus Glasfasern, abgesehen von optionalen Binde- oder Befestigungsmitteln. Mit Binde- oder Befestigungsmitteln sind insbesondere Mittel zu verstehen, die zur Verbindung der einzelnen Schichten des Komposit-Vlieses miteinander oder zur Befestigung des Komposit-Vlieses an einer Wand/Fassade nötig sind. Die Kunstfaservliesschicht besteht zu mindestens 50%, bevorzugt 75%, besonders bevorzugt 90% aus schwer entflammbaren Kunstfasern.

So wird die Reißfestigkeit des Komposit-Vlieses durch die Gewebeschicht gewährleistet. Die Zugkräfte werden durch das Gewebe aufgenommen, wodurch eine Dehnung bzw. ein Reißen des Vlieses verhindert wird. Die wünschenswerte Wasserspeicherfähigkeit kann durch die faserige Struktur des Kunstfaservlieses bereitgestellt werden. Die Komposit-Struktur des erfindungsgemäß verwendeten Komposit-Vlieses erlaubt zudem ein sehr vorteilhaftes Gewicht im Verhältnis zum Volumen und die positiven Eigenschaften jedes Bestandteils gleichen die negativen Eigenschaften der übrigen Bestandteile effektiv aus. Die UV-beständige Beschichtung sorgt dafür, dass die Verwendung des Komposit-Vlieses dauerhaft ist und auch in sonniger Ausrichtung über mehrere Jahre die volle Leistung erbringen kann. Die Kunstfaservliesschicht hat zudem eine stark brandhemmende Wirkung. Um diese zu unterstützen, können auch die übrigen Bestandteile des verwendeten Komposit-Vlieses brandhemmende Eigenschaften aufweisen, beispielsweise indem die Faser der Gewebeschicht an sich nicht brennbar sind (Metalldraht, Glasfasern) oder mit einer nicht brennbaren Hülle versehen oder beschichtet sind. Die UV-beständige Beschichtung ist vorteilhafterweise ebenfalls brandhemmend und temperaturbeständig.

In einer vorteilhaften Ausführungsform der Verwendung gemäß der Erfindung sind die Kunstfaservliesschicht und die Gewebeschicht durch punktuelles bzw. lineares Verkleben oder Vernähen oder, besonders bevorzugt, durch Vernadeln direkt miteinander verbunden. Das besonders bevorzugte Vernadeln sorgt für eine stabile flächige Verbindung, was die Lebensdauer des Komposit-Vlieses erhöhen kann. Zudem wird die Kunstfaserschicht beim Vernadeln in einem gewissen Maße komprimiert, wodurch das Zerfasern der Kunstfaserschicht (z.B. durch Vögel, die Nistmaterial suchen) verhindert werden kann.

In einer vorteilhaften Ausführungsform der Verwendung gemäß der Erfindung ist das Komposit-Vlies an einer äußeren Wand oder Gebäudefassade im Wesentlichen senkrecht angeordnet. Die Gewebeschicht des Komposit-Vlieses kann vorteilhaft in einer Flächen-Dimension (der vertikal ausgerichteten Richtung) eine höhere Zugfestigkeit aufweisen, als in der anderen. Die Beanspruchung in horizontaler Richtung ist bei der Verwendung geringer als in der Vertikalen, da die Gewebeschicht im Wesentlichen das gesamte Gewicht des Komposit-Vlieses trägt. In der horizontalen Richtung kann daher eine weniger dichte Verwebung gewählt werden, was die Luft- und Wasserdurchlässigkeit des Komposit-Vlieses verbessert.

In einer vorteilhaften Ausführungsform der Verwendung gemäß der Erfindung ist zwischen der äußeren Wand oder Gebäudefassade und dem Komposit-Vlies ferner eine Vegetationstragschicht vorgesehen. Die Erfindung ist jedoch gleichsam mit alternativen Begrünungssystemen verwendbar. So kann etwa auch ein Gestell mit Pflanzkübeln oder Pflanztöpfen durch die erfindungsgemäße Verwendung eines Komposit-Vlieses abgedeckt werden.

In einer bevorzugten Ausführungsform wird das Komposit-Vlies geschlitzt bzw. durchschnitten; durch den Schlitz wird die Wurzel der Pflanze in die dahinterliegenden vegetationstragenden Schichten (z.B. Substrat) eingesetzt. Die Schnittstelle bleibt durch die Bauweise des Komposit-Vlieses glatt und fasert nicht auf.

Bevorzugte Anbringungsverfahren des Komposit-Vlieses an einer Wand/Fassade umfassen Tackern, Verschrauben, Klammern, Kleben und/oder Schweißen der Schichten, sowie Einklemmen, wobei sich das Klammern bzw. Tackern als in der Praxis besonders einfach herausgestellt hat.

In einer bevorzugten Ausführungsform ist die Kunstfaservliesschicht des Komposit-Vlieses dem Gebäude bzw. der Fassade zugewandt, wobei die Gewebeschicht zwischen Kunstfaservliesschicht und Beschichtung angeordnet ist. Die Gewebeschicht bildet somit eine geeignete Grundlage für die Beschichtung. Zudem ist die Beschichtung bevorzugt eine Farbbeschichtung, um dem außenliegenden Vlies an der Wand/der Fassade eine ansprechende Erscheinung zu verleihen.

In einer bevorzugten Ausführungsform ist die Gewebeschicht des Komposit-Vlieses ein tragfähiges Gewebe aus wasserfesten Kunstfasern. Wie bereits oben erwähnt, trägt die Gewebeschicht einen Großteil des Gewichts des Komposit-Vlieses. Die Auswahl einer geeigneten Kunstfaser kann neben der Zugfestigkeit auch für die wünschenswerte Wasserfestigkeit, Unverrottbarkeit und günstige Brandschutz- bzw. brandhemmende Eigenschaften der Gewebeschicht sorgen. Je nach Einsatzgebiet, beispielsweise als Abdeckung für ein Substrat, das höheren Pflanzen als Wurzelbereich dienen soll, ist ebenfalls eine Beständigkeit gegen Düngerlösungen und Huminsäure wünschenswert.

In einer bevorzugten Ausführungsform ist das Komposit-Vlies als Ganzes oder nur die Beschichtung perforiert. Solche Perforationen sollen dem Luft-/Gasaustausch für die dahinterliegenden Schichten bzw. dem Wurzelraum dienen. Die Perforationen fördern somit unmittelbar das Pflanzenwachstum und hemmen das Wachstum von Pilzen. Durchmesser und Dichte der Perforationen sind nicht besonders beschränkt, bewegen sich bevorzugt von 1 bis 5 mm (Durchmesser) und von 100 bis 5000 Perforationen pro Quadratmeter (Flächendichte).

In einer bevorzugten Ausführungsform ist die Beschichtung eine luftdurchlässige und UV-beständige Farbbeschichtung. Farbbeschichtungen mit den wünschenswerten Eigenschaften sind für gewöhnlich nicht wasserdurchlässig, so dass Perforationen der Beschichtung besonders vorteilhaft für den Gas- und Wasseraustausch mit der Umgebung sind.

In einer bevorzugten Ausführungsform ist die Kunstfaservliesschicht aus E-Glasfasern, S-Glasfaser, R-Glasfasern, C-Glasfasern, ECR-Glasfasern, AR-Glasfasern oder einer Mischung aus diesen gebildet. Besonders E-Glasfasern sind aufgrund ihrer kostengünstigen Herstellung und robusten Eigenschaften für die erfindungsgemäße Verwendung geeignet. Jedoch können spezielle Bedingungen, etwa durch notwendigen Spezialdünger oder gemäß der Umgebung notwendige Insektizide, Herbizide oder Fungizide, die Beimischung oder gar ausschließliche Verwendung von spezielleren Kunstfasern nötig machen.

In einer bevorzugten Ausführungsform ist das Komposit-Vlies an einer Grundplatte oder einem Gestell befestigt. Das Gestell bzw. die Grundplatte können als Halterung für die Substratschicht dienen und das Komposit-Vlies anschließend direkt, durch die Substratschicht hindurch, oder indirekt, also nur an über die Substratschicht, mit dem Gestell bzw. der Grundplatte verbunden werden, etwa durch Klammern, Kleben, Nähen oder dergleichen. Alternativ kann für das Komposit-Vlies auch ein eigenes Gestell vorgesehen werden. Das Gestell bzw. die Grundplatte dienen bei der Verwendung in einer Ausführungsform zudem als Halterung für optionale Bewässerungsleitungen oder Zuleitungen für Nährstofflösungen für die Pflanzen in der Substratschicht.

### Kurze Beschreibung der Zeichnungen

Weitere Ziele, Merkmale, Vorteile und Anwendungsmöglichkeiten der erfindungsgemäßen Verwendung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.
In den Zeichnungen zeigen
Fig. 1 eine schematische Ansicht des Schichtaufbaus eines Komposit-Vlieses gemäß einer Ausführungsform der Erfindung.
Fig. 2 eine Verwendung einer Ausführungsform der Erfindung, wobei ein Komposit-Vlies an einem Fassadenbegrünungssystem befestigt ist;
Fig. 3A und 3B ein weiteres Beispiel einer Ausführungsform eines Fassadenbegrünungssystems mit Komposit-Vlies.

### Beschreibung der Ausführungsformen

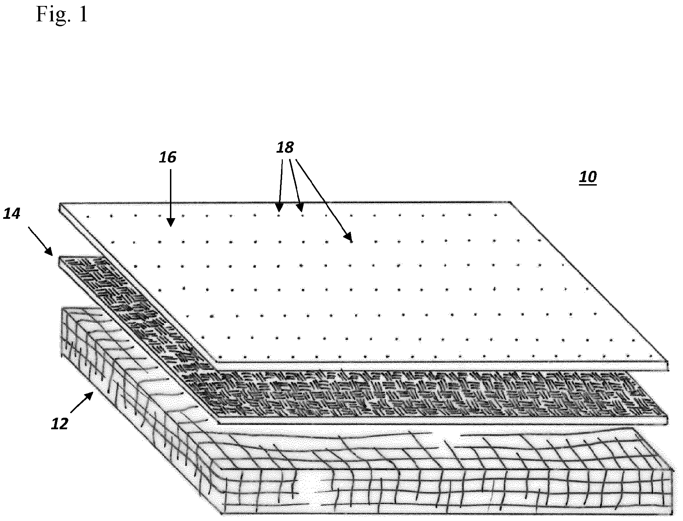

Wie in Fig. 1 dargestellt, ist auf der Gewebeschicht 14 eine Beschichtung 16, besonders bevorzugt eine UV-beständige Farbbeschichtung 16 vorgesehen. Wie ferner in Fig. 1 dargestellt, weist die Beschichtung 16 Perforationen 18 auf, die gleichmäßig auf der Fläche der Beschichtung 16 erzeugt wurden. Die Perforationen können nur die Beschichtung 16 oder das gesamte Komposit-Vlies 10 durchdringen, um Gas- und Wasseraustausch zwischen den Schichten und mit der Umgebung zu fördern. Je nach Anwendungsgebiet (vorherrschende Wetterseite, Sonneneinstrahlung, Temperaturschwankungen etc.) können mehr oder weniger, größere oder kleinere, oder sogar gar keine Perforationen vorgesehen werden. Durchmesser und Dichte der Perforationen sind nicht besonders beschränkt, bewegen sich bevorzugt jedoch von 1 bis 5 mm (Durchmesser) und von 100 bis 5000 Perforationen pro Quadratmeter (Flächendichte). Die luftdurchlässige Beschichtung kann auch über geeignete Beschichtungsverfahren wie z. B. Schaumbeschichtung erzeugt werden. Hierzu werden vorzugsweise instabile Schäume, die nach der Beschichtung und vor der Trocknung /Vernetzung kollabieren, eingesetzt. Auf diese Weise werden die Fasern mit der farbigen Beschichtung ummantelt und kein Film gebildet.

Die Aufgabe der Kunstfaservliesschicht 12 ist eine geschlossene Struktur zu bilden, die wasserdurchlässig und wasserspeichernd ist, jedoch trotz Luftdurchlässigkeit den Windeintrag in tiefere Schichten mindert. Die Kunstfaservliesschicht 12 kann gleichermaßen Substratersatzstoff sein. Die Aufgabe der Gewebeschicht 14 ist es die Reißfestigkeit und die Witterungsbeständigkeit zu erhöhen und einen Schutz gegen Zerstörung durch Vögel zu bieten. Gleichzeitig ist das Gewebe 14 Grundlage für die Farbeschichtung 16. Ein besonderes Merkmal ist also die Reißfestigkeit des Komposit-Vlieses 10 bei gleichzeitiger "Flauschigkeit" und geschlossener Struktur. Die Farbbeschichtung 16 erhöht die UV-Beständigkeit und bildet eine optisch ansprechende Oberfläche.

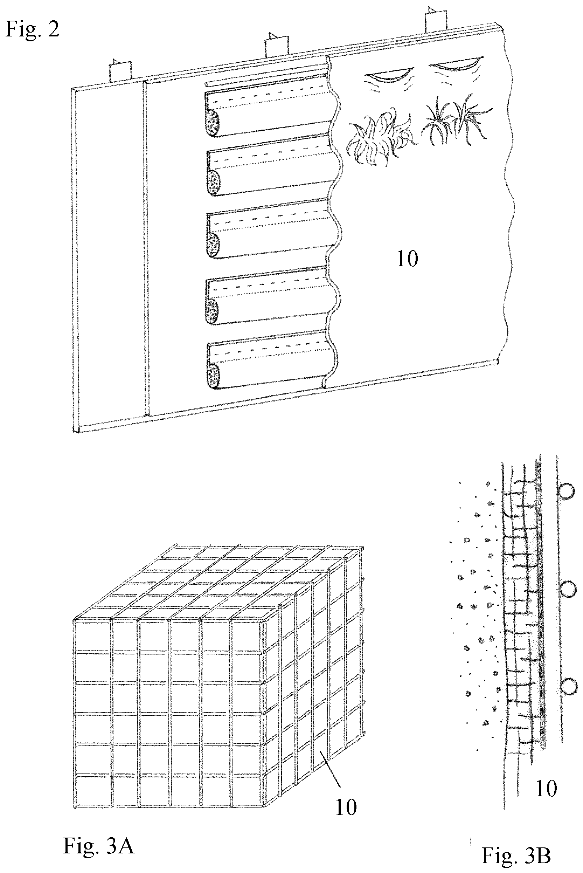

Wie aus den Fig. 2 ersichtlich, ist ein das Vlies-Substrat-System großflächig abdeckendes Abdeckvlies / Komposit-Vlies 10 vorgesehen.

Wie aus Fig. 3A bzw. 3B ersichtlich ist ein das Substrat-System in einer Gabione großflächig abdeckendes Abdeckvlies / Komposit-Vlies 10 vorgesehen. Es wird durch Stäbe oder Träger, beispielsweise die eines Gabienenkorbes, gehalten.

Fig. 2 und 3 zeigt perspektivische Ansichten eines Komposit-Vlieses 10 gemäß einer Verwendungsausführungsform der Erfindung. Das Komposit-Vlies 10 umfasst eine Kunstfaservliesschicht 12, auf die eine Gewebeschicht 14 durch flächiges Vernähen oder durch punktuelles oder lineares Verkleben, oder, besonders bevorzugt, durch flächiges und kraftschlüssiges Vernadeln befestigt ist. Vernadeln sorgt für eine gewisse Kompression des Kunstfaservlieses, was das Zerfasern des Kunstfaservlieses 12 verhindern kann wodurch zudem auf die Verwendung eines leicht entflammbaren Bindemittels verzichtet werden kann. Den gleichen Effekt kann man durch flächiges Vernähen mit einem geeigneten Nähgarn (temperaturbeständig) erreichen, was jedoch ein aufwändigeres Verfahren ist. Falls die Schichten 12, 14 verklebt werden sollen, was die schnellste und kostengünstigste Alternative bilden kann, wäre drauf zu achten, dass der Gas- und Wasseraustausch mit der Umwelt nicht durch zu dichtes Verkleben behindert wird.

Das in einer Ausführungsform verwendete Kunstfaservlies der Kunstfaservliesschicht 12 des Komposit-Vlieses 10 weist bevorzugt ein Flächengewicht von 400-1000 g/m² auf. Weiterhin handelt es sich bei den Kunstfasern der Kunstfaservliesschicht 12 bevorzugt um E-Glasfasern, welche besonders kostengünstig sind. Der Durchmesser dieser E-Glasfasern beträgt bevorzugt 6-13 µm, um Gesundheitsgefahren durch das Einatmen sehr dünner Glasfasern auszuschließen. Die Fasern der Gewebeschicht sind bevorzugt ausgewählt aus der Gruppe, bestehend aus Polymerfasern, Metalldraht, beschichten Naturfasern oder dergleichen. Die Fasern des Gewebes können zudem auch Glasfasern umfassen oder gar vollständig aus diesen bestehen.

### Ausführungsbeispiel

In einem vorteilhaften Ausführungsbeispiel der Verwendung gemäß der Erfindung ist das Kunstfaservlies aus E-Glas mit einem Flächengewicht von 100-3000 g/m², bevorzugt 200-1000g/m², besonders bevorzugt zwischen 300g/m² und 600 g/m². Die verwendete Gewebeschicht besteht ebenfalls aus E-Glas mit einem Flächengewicht von 100-1000g/m² besonders bevorzugt 250-500g/m². Die Verwendung von texturiertem Garn als Schußmaterial bei der Gewebeherstellung zeigte sich als Vorteilhaft, da hiermit eine höhere Flauschigkeit des Gewebes und des Komposit-Vlieses durch Vernadeln erzielt werden kann. Die UV-beständige und hydrolysebeständige Beschichtung ist vorzugsweise auf wässriger Basis. Dabei kommen Dispersionen von vernetzenden Polymere wie Acrylaten, Silikonen, EVA oder PVdC, besonders bevorzugt PUR zur Anwendung. Die Rezepturen enthalten des Weiteren vorzugsweise Verschäumer, Rheologiehilfsmittel, Farbpigmente und Flammschutzmittel. Die Applikation der Beschichtung auf die Gewebeseite des Verbundvlieses geschieht mittels Schaum bei einem bevorzugten Litergewicht von 250 g/l. Der Schaum wird mittels Rakel flächig auf dem Gewebe verteilt und anschließend in einem Trockenkanal getrocknet bzw. vernetzt. Das Trockengewicht der erzielten Beschichtung beträgt zwischen 10 g/m² und 150 g/m². Ebenso denkbar ist eine Applikation mittels Sprühen.

Gemäß der vorliegenden Offenbarung werden die für Vegetationstragschichten optimalen Eigenschaften eines Vlieses mit den für die Tragfähigkeit und Standsicherheit optimalen Eigenschaften eines Gewebes kombiniert, wobei die der Witterung ausgesetzte Sichtseite mit den optimalen Eigenschaften einer UV-beständigen, farblich ansprechenden Beschichtung ausgerüstet wird.

Die Verwendung beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Bezugszeichenliste

- 10: Komposit-Vlies
12 Vlies-Ebene
14 Gewebe-Einlage
16 Farb-Beschichtung
18 Perforation

## Patentansprüche

1. Verwendung eines Komposit-Vlieses (10) zur Gebäudewand- oder Fassadenbegrünung, **dadurch gekennzeichnet, dass** das Komposit-Vlies (10) umfasst:
eine Kunstfaservliesschicht (12), die zu mindestens 50%, bevorzugt 75%, besonders bevorzugt 90% aus schwer entflammbaren Kunstfasern besteht;
eine Gewebeschicht (14); und
eine UV-beständige Beschichtung (16), wobei die Beschichtung (16) an der der Gebäudewand bzw. der Fassade abgewandten Seite des Komposit-Vlieses (10) angeordnet ist.

2. Verwendung gemäß Anspruch 1, wobei die für Vegetationstragschichten optimalen Eigenschaften eines Vlieses mit den für die Tragfähigkeit und Standsicherheit optimalen Eigenschaften eines Gewebes kombiniert werden, wobei die der Witterung ausgesetzte Sichtseite mit den optimalen Eigenschaften einer UV-beständigen, farblich ansprechenden Beschichtung ausgerüstet wird.

3. Verwendung gemäß Anspruch 1 oder 2, wobei
die Kunstfaservliesschicht (12) und die Gewebeschicht (14) durch punktuelles bzw. lineares Verkleben oder Vernähen oder, besonders bevorzugt, durch Vernadeln direkt miteinander verbunden sind.

4. Verwendung gemäß einem der vorstehenden Ansprüche, wobei
das Komposit-Vlies (10) an einer äußeren Gebäudewand oder Gebäudefassade (1) im Wesentlichen senkrecht angeordnet ist.

5. Verwendung gemäß Anspruch 4, wobei
zwischen der äußeren Gebäudewand oder Gebäudefassade und dem Komposit-Vlies (10) ferner eine Vegetationstragschicht vorgesehen ist.

6. Verwendung gemäß einem der vorstehenden Ansprüche, wobei
die Kunstfaservliesschicht (12) des Komposit-Vlieses (10) dem Gebäude bzw. der Fassade zugewandt ist, die Gewebeschicht (14) zwischen Kunstfaservliesschicht (12) und Beschichtung (16) angeordnet ist.

7. Verwendung gemäß einem der vorstehenden Ansprüche, wobei
die Gewebeschicht (14) des Komposit-Vlieses (10) ein tragfähiges Gewebe aus wasserfesten Kunstfasern umfasst.

8. Verwendung gemäß einem der vorstehenden Ansprüche, wobei das Komposit-Vlies (10) insgesamt luftdurchlässig ist.

9. Verwendung gemäß einem der vorstehenden Ansprüche, wobei
die Beschichtung (16) eine z.B. bevorzugt durch Perforierung luftdurchlässige und UV-beständige Farbbeschichtung ist.

10. Verwendung gemäß einem der vorstehenden Ansprüche, wobei
die Kunstfaservliesschicht (12) aus E-Glasfasern, S-Glasfaser, R-Glasfasern, C-Glasfasern, ECR-Glasfasern, AR-Glasfasern oder einer Mischung aus diesen besteht.

11. Verwendung gemäß einem der vorstehenden Ansprüche, wobei
die Kunstfaservliesschicht (12) aus PAN-, Melaminharz-, Aramid-, Kohle- bzw. Graphit- Fasern oder anderen schwer entflammbaren Fasern oder einer Mischung aus diesen besteht.

12. Verwendung gemäß einem der Ansprüche 1 bis 9, wobei
die Kunstfasern der Kunstfaservliesschicht (12) Glasfasern umfassen.

13. Verwendung gemäß Anspruch 12, wobei
die Kunstfaservliesschicht (12) aus Glasfasern besteht, abgesehen von optionalen Binde- oder Befestigungsmitteln.

14. Verwendung gemäß einem der vorstehenden Ansprüche, wobei
die die Gewebeschicht (14) aus E-Glasfasern, S-Glasfaser, R-Glasfasern, C-Glasfasern, ECR-Glasfasern, AR-Glasfasern, PAN-, Melaminharz-, Aramid-, Kohle- bzw. Graphit- Fasern, anderen schwer entflammbaren Fasern oder einer Mischung aus diesen besteht.

15. Verwendung gemäß einem der vorstehenden Ansprüche, wobei
das Komposit-Vlies mindestens schwer entflammbar nach B -s2,d0 gem. DIN EN 13501-1 ist.
